# FASCICULE DE BREVET EUROPEEN

(11) **EP 3 830 399 B1**
(45) Date de publication et mention de la délivrance du brevet: **06.07.2022**
(21) Numéro de dépôt: 19759657.0
(22) Date de dépôt: 26.07.2019
(51) Int. Cl.: F02C 3/10, F02C 7/268

(54) **SYSTÈME DE GÉNÉRATION DE PUISSANCE ÉLECTRIQUE POUR AÉRONEF**
SYSTEM ZUR STROMERZEUGUNG FÜR EIN FLUGZEUG
SYSTEM FOR GENERATING ELECTRIC POWER FOR AN AIRCRAFT

(30) Priorité: 27.07.2018 FR 1857009
(43) Date de publication de la demande: 09.06.2021
(73) Titulaire: SAFRAN, 75015 Paris (FR)
(72) Inventeur: ROUGIER, Florent, 77550 MOISSY-CRAMAYEL (FR); PETIBON, Stéphane, 77550 MOISSY-CRAMAYEL (FR); SALANNE, Jean-Philippe, Hervé, 77550 MOISSY-CRAMAYEL (FR)
(74) Mandataire: Cabinet Beau de Loménie
(86) Numéro de dépôt international: PCT/FR2019/051859
(87) Numéro de publication internationale: WO 2020/021214

(56) Documents cités:
- EP-A2- 1 712 761
- WO-A1-2009/118298
- FR-A1- 3 056 194
- US-A1- 2011 089 691
- US-A1- 2018 170 564

## Description

### Arrière-plan de l'invention

L'invention concerne le domaine de l'électrification de la propulsion des avions et autres giravions et elle se rapporte plus particulièrement à un système de génération de puissance électrique intégrant une nouvelle architecture de turbogénérateurs pour aéronef.

Actuellement, au niveau des turbines à gaz, il existe principalement deux technologies que sont les turbines liées (par exemple l'APU) ou les turbines libres (par exemple les turbomoteurs d'hélicoptère ou les turbopropulseurs d'avion). On s'intéressera principalement à ces dernières qui sont composées d'un corps haute pression et d'un corps basse pression intégrant la turbine libre.

Pour réaliser un turbogénérateur, il faut associer la turbine libre à un générateur électrique. Plusieurs technologies de turbogénérateurs existent mais elles ne sont pas toujours adaptées aux différentes fonctions et modes de fonctionnement recherchés pour la propulsion des aéronefs. Des systèmes de génération de puissance électrique pour aéronefs sont décrits dans les documents de l'art antérieur EP1712761 et US2011/089691.

### Objet et résumé de l'invention

La présente invention propose donc un système de génération de puissance électrique pour aéronef intégrant une nouvelle architecture de turbogénérateur aéronautique plus versatile et développant une puissance électrique comprise entre 100KW et 1MW, typiquement de 500KW.

Ce but est atteint avec un système de génération de puissance électrique pour aéronef comportant :
une turbine à gaz ayant un arbre haute pression et délivrant un flux de gaz pour actionner une turbine libre,
caractérisé en ce qu'il comporte en outre un générateur à aimants permanents polyphasé couplé à la turbine à gaz et apte à délivrer une première tension alternative pour alimenter au travers de premiers moyens de conversion un réseau d'alimentation primaire de l'aéronef, la turbine libre et le générateur à aimants permanents étant montés sur un même arbre d'entrainement concentrique à l'arbre haute pression de la turbine à gaz,
un démarreur monté sur l'arbre haute pression apte à assurer le démarrage de la turbine à gaz,
le démarreur étant un démarreur/générateur à aimants permanents apte à délivrer une seconde tension alternative pour alimenter un réseau d'alimentation secondaire de l'aéronef et des équipements auxiliaires de la turbine à gaz et lesdits premiers moyens de conversion comportent de préférence deux premiers convertisseurs AC/DC commandés depuis une unité de gestion.

L'intégration dans le système d'un démarreur/générateur et d'un générateur à aimants permanents permet d'obtenir un bon rendement et une bonne densité de puissance. En l'absence d'élément de contrôle, la tension de sortie est toutefois directement dépendante de la vitesse de rotation et de la puissance débitée. En outre, avec un tel agencement, en cas de défaut d'un des deux premiers convertisseurs (avantageusement bidirectionnels), l'autre peut continuer à fournir de la puissance au réseau d'alimentation primaire voire au réseau d'alimentation secondaire et aux équipements auxiliaires au travers du second convertisseur.

Avantageusement, le système comporte en outre des seconds moyens de conversion de ladite seconde tension alternative en une seconde tension continue disposés entre le démarreur/générateur à aimants permanents et le réseau d'alimentation primaire. Lesdits seconds moyens de conversion comportent de préférence un second convertisseur AC/DC (avantageusement bidirectionnel) commandé depuis une unité de gestion.

Avec un tel agencement, outre le complément de puissance apporté par le second convertisseur sur le réseau primaire lorsque les deux premiers convertisseurs sont déjà actifs, en cas de défaut interne au générateur à aimants permanents, on peut facilement couper le premier convertisseur concerné et utiliser l'autre premier convertisseur encore actif pour défluxer ce générateur à aimants permanents (lorsque ce dernier est un générateur polyphasé) au travers du second convertisseur.

En outre, en fonctionnement normal, ce second convertisseur permet de transférer de la puissance venant du démarreur/générateur à aimants permanents vers le réseau d'alimentation primaire et ainsi réaliser un transfert du HP vers le BP ou vice et versa. Cela permet d'optimiser le dimensionnement de la turbine en réduisant les différentes marges et notamment la marge au pompage.

De préférence, ladite unité de gestion comporte une fonction de contrôle permettant de détecter des défauts au niveau du bobinage du générateur à aimants permanents polyphasé, le défaut détecté pouvant être un court-circuit inter spires ou un court-circuit phase-phase ou phase-neutre entre le générateur et le convertisseur AC/DC.

Avantageusement, ledit réseau d'alimentation primaire comporte au moins une source ou stockeur électrique de type batterie ou super capacité et ledit réseau d'alimentation secondaire comporte au moins une source ou stockeur électrique de type batterie ou super capacité.

L'invention concerne aussi un aéronef comportant un système de génération de puissance électrique tel que précité.

### Brève description des dessins

L'invention sera mieux comprise à la lecture de la description faite ci-après à titre indicatif mais non limitatif en référence aux figures suivantes sur lesquelles :
- la figure 1 montre une architecture d'un turbogénérateur aéronautique conforme à l'invention,
- la figure 2 illustre les principaux modes de fonctionnement du turbogénérateur aéronautique de la figure 1, et
- les figures 3A à 3E décrivent les flux de puissance mise en œuvre dans les différents modes de fonctionnement de la figure 2.

### Description détaillée de modes de réalisation de l'invention

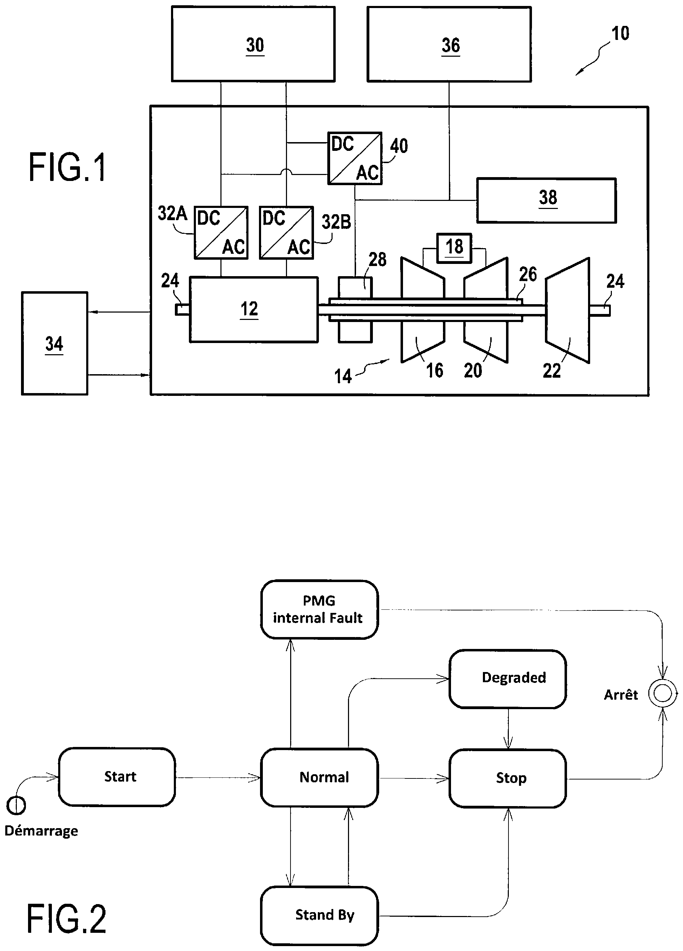

La figure 1 montre un système de génération de puissance électrique 10 pour aéronef conforme à l'invention comportant un générateur électrique 12 couplé à une turbine à gaz 14 pour former ce qu'il est convenu d'appeler un turbogénérateur aéronautique. La turbine à gaz qui comprend classiquement un compresseur 16, une ou plusieurs chambres de combustion (le générateur de gaz 18) et une turbine de puissance ou turbine haute pression 20, est du type comportant une turbine libre 22. La turbine libre 22 et le générateur électrique 12 sont montés sur un même arbre d'entrainement 24 concentrique à un arbre dit haute pression 26 support du compresseur 16 et de la turbine de puissance 20. Cet arbre support supporte également un démarreur/générateur électrique 28 assurant le démarrage de la turbine à gaz.

Le générateur électrique 12 connecté mécaniquement à la turbine libre 22 est un générateur à aimants permanents (PMG) connectés à un réseau d'alimentation primaire 30 par le biais d'un premier moyen de conversion formé par deux premiers convertisseurs AC/DC 32A, 32B avantageusement bidirectionnels et commandés depuis une unité de gestion 34. Les deux convertisseurs délivrent chacun une première tension continue à partir d'une première tension alternative délivrée par le PMG.

Le démarreur/générateur électrique 28 connecté mécaniquement à l'arbre haute pression 26 est un démarreur/générateur à aimants permanents (PMS/G) alimentant un réseau secondaire 36 et des équipements auxiliaires 38 de la turbine à gaz (comme la pompe d'injection du carburant ou les dispositifs de lubrification et de refroidissement). Il est également connecté au réseau d'alimentation primaire 30 via un second moyen de conversion formé par un convertisseur AC/DC 40 avantageusement bidirectionnel et commandé également depuis l'unité de gestion 34. Le convertisseur 40 délivre une seconde tension continue à partir d'une seconde tension alternative délivrée par le PMS/G.

Le compresseur 16 qui assure la compression de l'air entrant dans le générateur de gaz 18 peut comporter un ou plusieurs étages et peut être de type axial ou centrifuge ou être formée par une association des deux. La turbine de puissance 20 qui reçoit le flux de gaz issu du générateur de gaz 18 peut comporter un ou plusieurs étages et peut être radiale ou centrifuge ou être formée par une association des deux.

La gestion du turbogénérateur aéronautique est de façon générale assurée par l'unité de gestion 34 qui est constituée par un calculateur dédié récupérant des mesures et lui fournissant des commandes, notamment pour le démarrage et l'arrêt du générateur de gaz 18 ou encore le défluxage du générateur à aimants permanents 12. Ce calculateur peut intégrer en outre une fonction de contrôle permettant de détecter des défauts internes au niveau du générateur à aimants permanent 12 et notamment des courts-circuits au niveau de son bobinage.

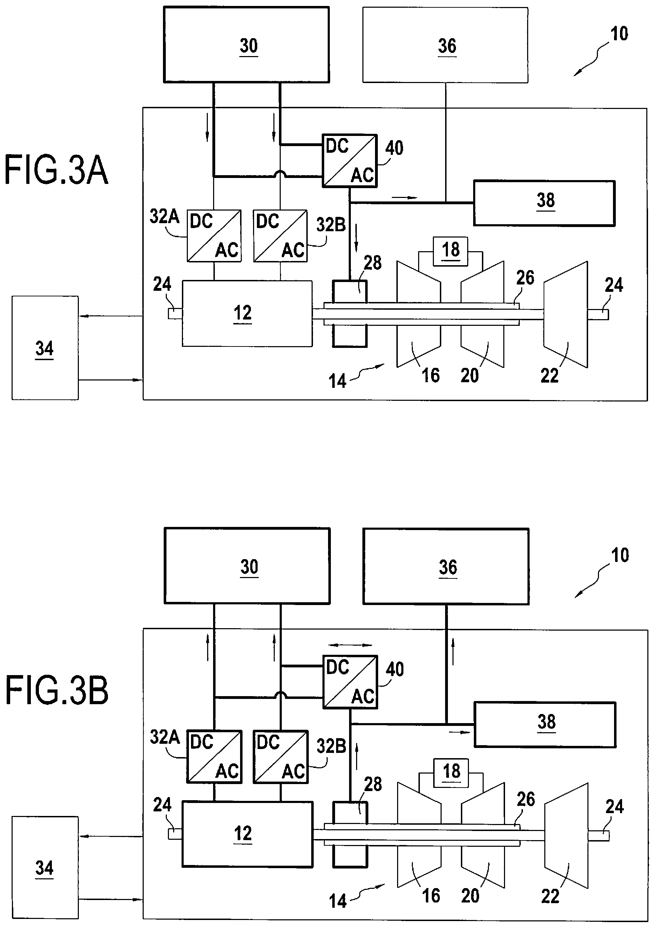

La figure 2 illustre en combinaison avec les figures 3A à 3E, les principaux modes de fonctionnement du turbogénérateur aéronautique de l'invention et les flux de puissance mis en œuvre lors de ces différents modes. Pour la clarté de l'exposé, les différents contacteurs permettant les passages entre modes de fonctionnement, actionnés sélectivement depuis l'unité de gestion 34 et disposés entre les différents éléments du système 10, n'ont pas été représentés.

En mode de démarrage (start - figure 3A), le second convertisseur AC/DC 40 connecté au PMS/G 28 est utilisé en mode onduleur afin d'entrainer l'arbre haute pression 26 à une vitesse d'allumage permettant le démarrage du générateur de gaz 18 et d'alimenter les équipements auxiliaires 38 nécessaires à ce démarrage. Ce fonctionnement en onduleur du second convertisseur suppose de prélever de la puissance sur le réseau d'alimentation primaire 30, ce qui sous-entend que celui-ci comporte au moins une source ou stockeur électrique (de type batterie ou super capacité par exemple) pour permettre ce prélèvement initial.

En mode courant (normal - figure 3B), la turbine à gaz 14 étant alors en fonctionnement, le PMS/G 28 alimente outre les équipements auxiliaires 38, le réseau d'alimentation secondaire 36. Le PMG 12 entrainé par la turbine libre 22 alimente à son tour le réseau d'alimentation primaire 30. Il convient de noter que du fait de la bidirectionnalité du second convertisseur AC/DC 40, il est possible de transférer dans ce mode courant de la puissance du PMG vers le PMS/G et inversement (c'est-à-dire un transfert de puissance entre les arbres haute et basse pression) via ce convertisseur.

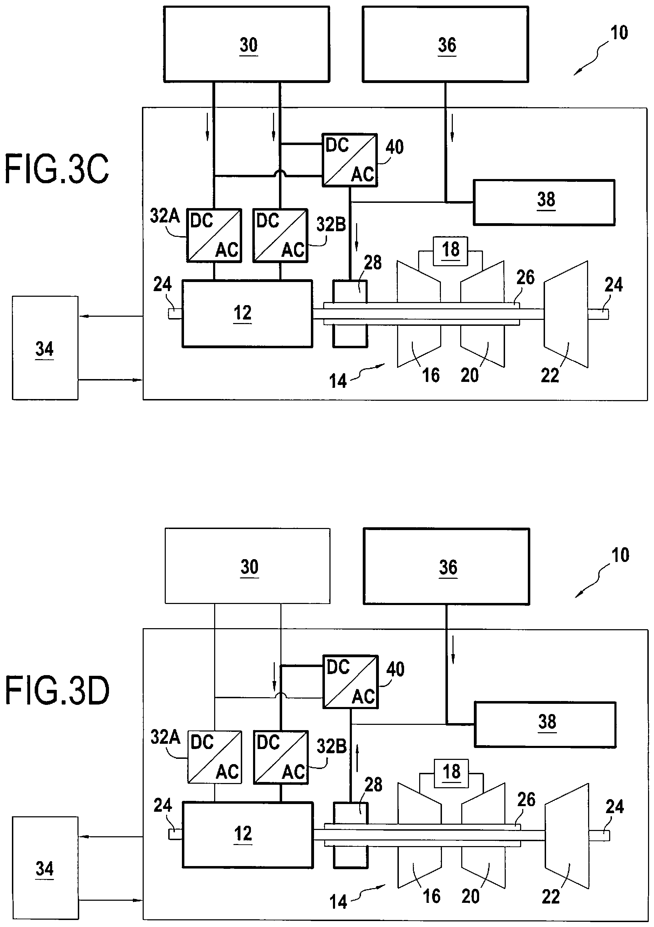

Du mode courant, il est possible de passer en un mode de veille (stand-by - figure 3C) dans lequel le générateur de gaz 18 est éteint mais l'arbre haute pression 26 et la turbine libre 22 sont entrainés depuis le réseau d'alimentation primaire 30 respectivement par le PMS/G 28 et le PMG 12 à une vitesse permettant un rallumage rapide de ce générateur de gaz. Il convient de noter que, pour que les générateurs électriques 12 et 28 fonctionnent en mode moteur, il est nécessaire, comme dans le mode de démarrage précédent, de prélever via un stockeur électrique (ou tout autre source électrique comme un autre turbogénérateur ou un groupe auxiliaire par exemple) de la puissance sur le réseau d'alimentation primaire 30 pour assurer le fonctionnement en onduleur des différents convertisseurs 32A, 32B, 40. De même, le réseau d'alimentation secondaire 36 continue d'alimenter les équipements auxiliaires 38, ce qui sous-entend que ce réseau secondaire comporte comme le réseau primaire également une source électrique (toutefois cette alimentation pourrait également provenir du réseau d'alimentation primaire 30 via le second convertisseur 40).

Ce mode peut être utile pour plusieurs cas d'utilisation :
a) dans le cas d'un aéronef bi-turbogénérateur dans lequel on utilise un turbogénérateur aéronautique à sa puissance nominale et on utilise l'autre en secours en cas de défaillance du premier. Ce mode présente l'avantage de permettre un redémarrage rapide.
b) dans le cas d'un lâcher de charge important sur le réseau d'alimentation primaire afin d'éviter un passage en survitesse du turbogénérateur aéronautique. L'alimentation en carburant est mise au minimum permettant de réduire la puissance mais elle ne peut être coupée pour prévenir l'extinction du générateur de gaz. En utilisant ce mode, on peut se permettre d'éteindre le générateur de gaz pour réduire plus rapidement la puissance puis le rallumer dès que le besoin de puissance remonte.

Si en mode normal un problème est détecté dans un bobinage du PMG 12, l'alimentation du réseau d'alimentation primaire 30 est arrêtée et l'on passe dans un mode de défaut interne (PMG Internai Fault - figure 3D). Le PMS/G 28 est alors utilisé pour défluxer le PMG 12 via le bobinage du PMG sain, le premier convertisseur AC/DC 32B associé à ce bobinage sain et le second convertisseur AC/DC 40. Cela permet de limiter les effets du défaut interne le temps d'arrêter le turbogénérateur (couper la turbine à gaz et l'alimentation du réseau primaire). Ce défluxage du PMG suppose bien entendu que ce générateur soit polyphasé et que le défaut détecté est un court-circuit inter spires ou un court-circuit phase-phase ou phase-neutre entre la machine et le convertisseur.

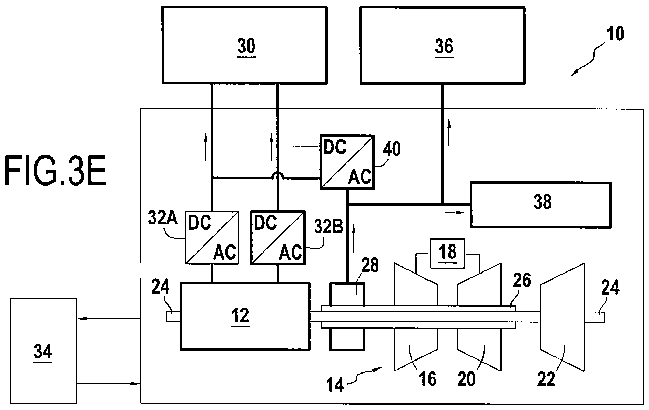

En cas de défaut d'un des deux premiers convertisseurs 32A, 32B, le turbogénérateur entre en mode dégradé (degraded - figure 3E) dans lequel le premier convertisseur en défaut (le convertisseur 32A sur le dessin) est isolé, le second convertisseur 40 s'y substituant pour fournir de la puissance au réseau d'alimentation primaire 30 et l'autre premier convertisseur 32B continuant de fournir de la puissance au réseau primaire 30. La puissance disponible est toutefois inférieure à la puissance nominale. Le réseau d'alimentation secondaire 36 et les équipements axillaires 38 restent alimentés depuis le PMS/G 28.

Enfin, lors d'un passage en mode d'arrêt (stop - figure 2) suite à une demande correspondante, le turbogénérateur est arrêté comme une turbomachine classique.

Il convient de noter que certaines des connexions ne constituent qu'un exemple préférentiel de réalisation et que plusieurs variantes sont notamment possibles au niveau de la connexion du réseau d'alimentation secondaire, des équipements auxiliaires et du second convertisseur bidirectionnel AC/DC.

Avec cette architecture de turbogénérateur aéronautique selon l'invention, les fonctions suivantes sont assurées :
- Démarrage du générateur de gaz,
- Génération des puissances primaire, secondaire et auxiliaire,
- Transfert de puissance entre les arbres HP et BP,
- Mode dégradé en cas de défaut d'un convertisseur,
- Protection contre les défauts internes du PMG,
- Protection contre les lâchés de charges.

## Revendications

1. Système de génération de puissance électrique (10) pour aéronef, le système comportant une turbine à gaz (14) ayant un arbre haute pression et délivrant un flux de gaz pour actionner une turbine libre (22), des premiers moyens de conversion (32A, 32B), un réseau d'alimentation primaire (30) de l'aéronef, un réseau d'alimentation secondaire (36) de l'aéronef et une unité de gestion (34),
**caractérisé en ce qu'**il comporte en outre un générateur à aimants permanents polyphasé (PMG 12) couplé à la turbine à gaz et apte à délivrer une première tension alternative pour alimenter au travers des premiers moyens de conversion (32A, 32B) le réseau d'alimentation primaire (30) de l'aéronef, la turbine libre et le générateur à aimants permanents étant montés sur un même arbre d'entrainement (24) concentrique à l'arbre haute pression de la turbine à gaz,
un démarreur monté sur l'arbre haute pression apte à assurer le démarrage de la turbine à gaz,
le démarreur étant un démarreur/générateur à aimants permanents (PMS/G 28) apte à délivrer une seconde tension alternative pour alimenter le réseau d'alimentation secondaire (36) de l'aéronef et des équipements auxiliaires (38) de la turbine à gaz, et lesdits premiers moyens de conversion comportent deux premiers convertisseurs AC/DC (32A, 32B) commandés depuis une unité de gestion (34).

2. Système selon la revendication 1, **caractérisé en ce que** lesdits premiers convertisseurs AC/DC sont bidirectionnels.

3. Système selon la revendication 1, **caractérisé en ce qu'**il comporte en outre des seconds moyens de conversion (40) de ladite seconde tension alternative (AC) en une seconde tension continue (DC) disposés entre le démarreur/générateur à aimants permanents (28) et le réseau d'alimentation primaire (30).

4. Système selon la revendication 3, **caractérisé en ce que** lesdits seconds moyens de conversion comportent un second convertisseur AC/DC commandé depuis une unité de gestion (34).

5. Système selon la revendication 4, **caractérisé en ce que** ledit second convertisseur AC/DC est bidirectionnel.

6. Système selon l'une quelconque des revendications 1 à 5, **caractérisé en ce que** ladite unité de gestion comporte une fonction de contrôle permettant de détecter des défauts au niveau du bobinage du générateur à aimants permanents polyphasé.

7. Système selon la revendication 6, **caractérisé en ce que** le défaut détecté est un court-circuit inter spires ou un court-circuit phase-phase ou phase-neutre entre le générateur et le convertisseur AC/DC.

8. Système selon l'une quelconque des revendications 1 à 7, **caractérisé en ce que** ledit réseau d'alimentation primaire comporte au moins une source ou stockeur électrique de type batterie ou super capacité.

9. Système selon l'une quelconque des revendications 1 à 7, **caractérisé en ce que** ledit réseau d'alimentation secondaire comporte au moins une source ou stockeur électrique de type batterie ou super capacité.

10. Aéronef comportant un système de génération de puissance électrique (10) selon l'une quelconque des revendications 1 à 9.

## Patentansprüche

1. System zur Stromerzeugung (10) für ein Fluggerät, wobei das System eine Gasturbine (14) aufweist, die eine Hochdruckwelle hat und einen Gasstrom bereitstellt, um eine freie Turbine (22) anzutreiben, erste Konversionsmittel (32A, 32B), ein primäres Versorgungsnetz (30) des Fluggeräts, ein sekundäres Versorgungsnetz (36) des Fluggeräts und eine Verwaltungseinheit (34),
**dadurch gekennzeichnet, dass** es ferner einen Mehrphasen-Dauermagnetgenerator (PMG 12) aufweist, der an die Gasturbine gekoppelt ist und imstande, eine erste Wechselspannung bereitzustellen, um anhand erster Umwandlungsmittel (32A, 32B) das primäre Versorgungsnetz (30) des Fluggeräts zu versorgen, wobei die freie Turbine und der Dauermagnetgenerator auf derselben, zur Hochdruckwelle der Gasturbine konzentrischen Antriebswelle (24) angebracht sind,
einen auf der Hochdruckwelle angebrachten Starter, der imstande ist, den Start der Gasturbine sicherzustellen,
wobei der Starter ein Starter/Dauermagnetgenerator (PMS/G 28) ist, der imstande ist, eine zweite Wechselspannung bereitzustellen, um das sekundäre Versorgungsnetz (36) des Fluggeräts und Hilfsausrüstungen (38) der Gasturbine zu versorgen, und die ersten Umwandlungsmittel zwei erste AC/DC-Wandler (32A, 32B) aufweisen, die ab einer Verwaltungseinheit (34) gesteuert werden.

2. System nach Anspruch 1, **dadurch gekennzeichnet, dass** die ersten AC/DC-Wandler bidirektional sind.

3. System nach Anspruch 1, **dadurch gekennzeichnet, dass** es ferner zweite Umwandlungsmittel (40) der zweiten Wechselspannung (AC) in eine zweite Gleichspannung (DC) aufweist, die zwischen dem Starter/Dauermagnetgenerator (28) und dem primären Versorgungsnetz (30) angeordnet sind.

4. System nach Anspruch 3, **dadurch gekennzeichnet, dass** die zweiten Umwandlungsmittel einen zweiten AC/DC-Wandler aufweisen, der ab einer Verwaltungseinheit (34) gesteuert wird.

5. System nach Anspruch 4, **dadurch gekennzeichnet, dass** der zweite AC/DC-Wandler bidirektional ist.

6. System nach einem der Ansprüche 1 bis 5, **dadurch gekennzeichnet, dass** die Verwaltungseinheit eine Kontrollfunktion aufweist, die erlaubt, Fehler im Bereich der Wicklung des Mehrphasen-Dauermagnetgenerators zu ermitteln.

7. System nach Anspruch 6, **dadurch gekennzeichnet, dass** der ermittelte Fehler ein Kurzschluss zwischen den Windungen oder ein Phase-Phase- oder Phase-Nullleiter-Kurzschluss zwischen dem Generator und dem AC/DC-Wandler ist.

8. System nach einem der Ansprüche 1 bis 7, **dadurch gekennzeichnet, dass** das primäre Versorgungsnetz mindestens eine Stromquelle oder -speicher vom Typ Batterie oder Superkapazität aufweist.

9. System nach einem der Ansprüche 1 bis 7, **dadurch gekennzeichnet, dass** das sekundäre Versorgungsnetz mindestens eine Stromquelle oder -speicher vom Typ Batterie oder Superkapazität aufweist.

10. Fluggerät, aufweisend ein System zur Stromerzeugung (10) nach einem der Ansprüche 1 bis 9.

## Claims

1. Electrical power generation system (10) for an aircraft, the system including a gas turbine (14) having a high-pressure shaft and producing a gas flow to actuate a free turbine (22), first conversion means (32A, 32B), a primary power supply network (30) of the aircraft, a secondary power supply network (36) of the aircraft and a management unit (34),
**characterized in that** it further includes a polyphase permanent magnet generator (PMG 12) coupled to the gas turbine and able to deliver a first alternating voltage for supplying through the first conversion means (32A, 32B) the primary power supply network (30) of the aircraft, the free turbine and the permanent magnet generator being mounted on the same drive shaft (24) concentric with the high-pressure shaft of the gas turbine,
a starter mounted on the high-pressure shaft able to ensure the starting of the gas turbine,
the starter being a permanent magnet starter/generator (PMS/G 28) able to deliver a second alternating voltage for supplying the secondary power supply network (36) of the aircraft and auxiliary equipment (38) of the gas turbine, and said first conversion means include two first AC/DC converters (32A, 32B) controlled from a management unit (34).

2. System according to claim 1, **characterized in that** said first AC/DC converters are bidirectional.

3. System according to claim 1, **characterized in that** it further includes second means for converting (40) said second alternating voltage (AC) into a second direct voltage (DC) disposed between the permanent magnet starter/generator (28) and the primary power supply network (30).

4. System according to claim 3, **characterized in that** said second conversion means include a second AC/DC converter controlled from a management unit (34).

5. System according to claim 4, **characterized in that** said second AC/DC converter is bidirectional.

6. System according to any one of claims 1 to 5, **characterized in that** said management unit includes a monitoring function that allows detecting faults at the winding of the polyphase permanent magnet generator.

7. System according to claim 6, **characterized in that** the detected fault is an inter-turn short-circuit or a phase-to-phase or phase-to-neutral short-circuit between the generator and the AC/DC converter.

8. System according to any one of claims 1 to 7, **characterized in that** said primary power supply network includes at least one electrical source or storage unit of the battery or super capacitor type.

9. System according to any one of claims 1 to 7, **characterized in that** said secondary power supply network includes at least one electrical source or storage unit of the battery or super capacitor type.

10. Aircraft including an electrical power generation system (10) according to any one of claims 1 to 9.
